# EUROPÄISCHE PATENTSCHRIFT

(11) **EP 1 924 486 B1**
(45) Veröffentlichungstag und Bekanntmachung des Hinweises auf die Patenterteilung: **05.01.2011**
(21) Anmeldenummer: 06775943.1
(22) Anmeldetag: 08.09.2006
(51) Int. Cl.: B62D 21/11, B62D 29/00

(54) **VORDERACHSTRÄGER, INSBESONDERE FÜR KRAFTFAHRZEUGE**
FRONT-AXLE BRACKET, IN PARTICULAR FOR MOTOR VEHICLES
SUPPORT D'ESSIEU AVANT DESTINE EN PARTICULIER A DES VEHICULES

(30) Priorität: 13.09.2005 DE 102005043759
(43) Veröffentlichungstag der Anmeldung: 28.05.2008
(60) Teilanmeldung: 10007911.0
(73) Patentinhaber: KSM CASTINGS GMBH, 31137 Hildesheim (DE)
(72) Erfinder: EICKMANN, Jürgen, 31174 Schellerten (DE); LANGE, Uwe, 38855 Wernigerode (DE)
(74) Vertreter: Körner, Peter
(86) Internationale Anmeldenummer: PCT/DE2006/001582
(87) Internationale Veröffentlichungsnummer: WO 2007/031060

(56) Entgegenhaltungen:
- EP-A1- 0 779 204
- EP-A1- 1 504 983
- WO-A-90/05083
- DE-A1- 10 142 388
- US-A- 5 918 893
- US-A1- 2002 050 706

## Beschreibung

Die Erfindung betrifft einen Vorderachsträger für Kraftfahrzeuge. Solche Träger, wie sie auch als Schemel, Rahmen oder Hilfsrahmen bezeichnet werden, werden, nachdem sie mit Aggregaten bzw. Hilfsaggregaten versehen sind, als vormontierte Einheiten oder Module an Fahrzeugaufbauten, zum Beispiel an der Karosserie und/ oder an Längsträgern eines Fahrzeuges befestigt.

Ein derartiger Schemel bzw. Vorderachsträger, an dem die jeweils zwei Aufnahmen für die Lager zur Schwenklagerung je eines der beiden Radführungsglieder, wie der beiden Quer- bzw. Dreieckslenker, vorgesehen sind und weitere Aufnahmen bzw. Ausnehmungen zur Befestigung des Lenkgetriebes, des Stabilisators und anderer Aggregate und wobei der Schemel außerdem noch Aufnahmen bzw. Ausnehmungen für die Befestigung desselben als vorgefertigte Einheit mitsamt vormontierten Aggregaten am Fahrzeugaufbau besitzt, ist durch die DE 199 20 051 A1 bekannt geworden.

Derartige Schemel haben den Nachteil, dass sie sehr aufwändig in der Herstellung sind, weil zunächst für die Längs- als auch für die Querträger verschiedene Profile hergestellt werden müssen (auch Innendruck-verformte), weiterhin müssen die Aufnahmen für die verschiedenen Aggregate sowie die Aufnahmen des Schemels am Fahrgestell eigens angebracht werden, zum Beispiel angeschraubt oder verschweißt und einzelne Aufnahmen zum Beispiel am Ende der Seitenträger, umgeformt, zum Beispiel abgeplattet werden.

Aus der WO 90/05083 A1 ist ein Achsträger für Kraftfahrzeuge bekannt, bei dem jeweils zwei Aufnahmen bzw. Ausnehmungen für die Lagerstellen zur Schwenklagerung je eines von zwei Radführungsgliedern, wie Querlenker, und Aufnahmen zur Befestigung des Vorderachsträgers am Fahrzeugaufbau vorgesehen sind, sowie Aufnahmen bzw. Ausnehmungen für lie Befestigung des Lenkgetriebes.

DE 10142388 beschreibt einen ähnlichen Achsträger wobei eine Aufnahne für die Lagerung einer Pendelstütze vorgesehen ist.

Zudem ist ein in der Mercedes C-Klasse der Daimler AG vorbenutzter Vorderachsträger für Kraftfahrzeuge mit der Teilenummer A 2036280657 bekannt, bei dem verschiedene Aufnahmen bzw. Ausnehmungen vorgesehen sind.

Der vorliegenden Erfindung lag die Aufgabe zugrunde, die Nachteile der bisher bekannt gewordenen Träger bzw. Rahmen oder Schemel zu vermeiden und die Herstellung derselben zu vereinfachen und preiswerter zu gestalten, die Anzahl der Bauteile und damit Füge- und Montageprozesse zu reduzieren, die Handhabung zu verbessern, Gewicht am Fahrzeug selbst und am Rahmen und damit Transportkosten einzusparen und auch die ungefederten Massen zu verringern. Weiterhin soll die Montage der Aggregate zu einer vormontierten Einheit erleichtert und verbilligt werden, ebenso wie die Montage der vormontierten Einheit in das Kraftfahrzeug.

Gemäß der Erfindung wird dies bei einem Vorderachsträger nach einem der Ansprüche 1, 2 oder 3 dadurch erreicht, dass zusätzlich eine einzige Aufnahme bzw. Ausnehmung für die Lagerung einer Pendelstütze zur stabilen Abstützung von Motordrehmomenten bei gleichzeitiger Fixierung des Motors im Fahrzeug vorgesehen ist, wobei diese Aufnahme bzw. Ausnehmung vorwiegend zylindrisch hülsenartig ausgebildet und vorwiegend zur Fahrbahn ausgerichtet ist, und der Vorderachsträger als mit allen Aufnahmen bzw. Ausnehmungen einstückiges und diese untereinander verbindendes Bauteil aus Leichtmetall hergestellt ist.

Es kann vorteilhaft sein, wenn als Leichtmetall Aluminium oder eine Aluminiumlegierung verwendet wird. Weiterhin kann es vorteilhaft sein, das Bauteil, also den Vorderachsträger, in einem Aluminiumgussverfahren, wie im Kokillengussverfahren, herzustellen.

Ein derartiger Vorderachsträger oder Schemel ist gegenüber den bisher bekannt gewordenen insgesamt erheblich günstiger herzustellen, weil das Zusammenfügen einzelner den Rahmen bildender Teile und das Befestigen der Aufnahmen entfällt, also Füge- und Montageprozesse reduziert werden. Erstaunlicherweise ist durch die Erfindung auch eine erhebliche Gewichtsersparnis möglich durch das höhere spezifische Gewicht von Aluminium gegenüber dessen Wirkstoffen. Dadurch kann nicht nur Gewicht am Fahrzeug selbst und damit Kraftstoff eingespart werden, sondern es können weiterhin Transportkosten eingespart und die gefederten Massen verringert werden.

Der erfindungsgemäße Vorderachsträger kann weiterhin - bis auf die Ausnehmungen für die Aufnahmen und weiterer Ausnehmungen, z.B. für Montagezwecke - einen praktisch durchgehenden Grundkörper aufweisen, der zweckmäßigerweise von Verstärkungssicken umgeben ist und die Aufnahmen für die Lagerung der Radführungsglieder können als Ausleger ausgebildet sein. Dabei ist es zweckmäßig, wenn die eine der beiden Aufnahmen für jedes der Radführungsglieder derart ausgebildet ist, dass diese Aufnahme zumindest zwei, zumindest annähernd in der Fahrzeuglängsrichtung beabstandete Aufnahmeglieder besitzt, zur U-förmig umgreifenden Halterung des einen Lagers am Radführungsglied und wobei die zweite der Aufnahmen zur Lagerung jedes der Radführungsglieder - in Fahrzeuglängsrichtung gesehen - beabstandet von den Aufnahmegliedern ist und wobei die zweite Aufnahme zur Lagerung des anderen als Zapfen ausgebildeten Lagers des Radführungsgliedes dient, wobei der Lagerzapfen des Radführungsgliedes zumindest annähernd in Längsrichtung des Fahrzeuges verlaufen kann.

Es kann besonders vorteilhaft sein, an dem die zweite Auflage aufweisenden Ausleger - einstückig mit diesem - eine erste Aufnahme bzw. Ausnehmung für Befestigungsmittel zur Befestigung des Trägers am Fahrzeugaufbau vorzusehen, wobei es zweckmäßig sein kann, wenn diese Aufnahme auf der dem Grundkörper abgekehrten Seite dieser zweiten Aufnahme vorgesehen ist.

Gemäß einer Weiterbildung der Erfindung weist der die zweite Aufnahme aufweisende Ausleger zwei von der zweiten Aufnahme ausgehende, den Ausleger umgebende und in den Grundkörper einmündende Verstärkungssicken auf. Dabei kann es zweckmäßig sein, wenn die eine Verstärkungssicke auf der der ersten Aufnahme zugekehrten Seite des die zweite Aufnahme tragenden Auslegers verläuft und in den Grundkörper übergeht. Die weitere Verstärkungssicke auf der der ersten Auflage abgekehrten Seite des die zweite Aufnahme tragenden Auslegers kann zweckmäßigerweise im Bereich einer zweiten Aufnahme für Befestigungsmittel zur Festlegung des Trägers am Fahrzeugaufbau in den Grundkörper übergehen.

Durch eine derartige Ausgestaltung sind optimale Festigkeitswerte bei geringstmöglichem Materialeinsatz zu verwirklichen.

Der die zweite Aufnahme tragende und vom Grundkörper ausgehende Ausleger weist zweckmäßigerweise einen Doppel-T-Querschnitt auf.

Vorteilhaft kann es weiterhin sein, wenn der Ausleger zwischen der zweiten Aufnahme für die andere Lagerung und der zweiten Aufnahme bzw. Ausnehmung für Befestigungsmittel zur Festlegung des Trägers am Fahrgestell eine weitere zumindest annähernd quer zum Ausleger verlaufende Verstärkungssicke aufweist.

Durch eine derartige Ausgestaltung sind optimale Festigkeitswerte bei geringstmöglichem Materialeinsatz zu verwirklichen.

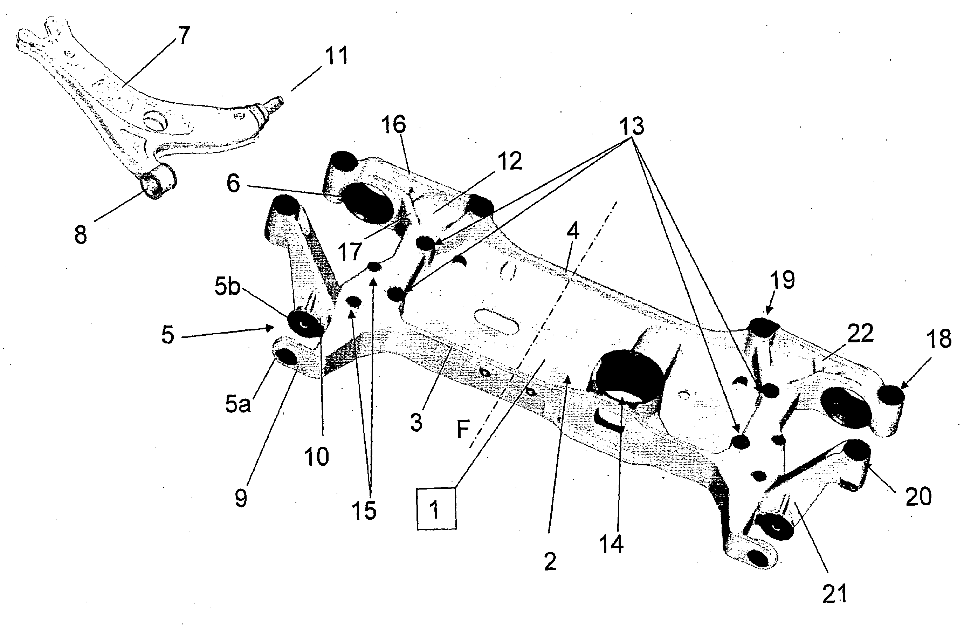

Anhand des in der Figur dargestellten Ausführungsbeispieles sei die Erfindung näher erläutert.

Der Vorderachsträger 1 besitzt hier einen Grundkörper 2, der von Versteifungsrippen 3,4 umgeben ist. Er besitzt weiterhin Lageraufnahmen 5,6 beidseits der Fahrzeugslängsachse F zur Lagerung eines Radführungsgliedes bzw. Querlenkers oder Dreiecklenkers 7 auf jeder Seite der Fahrzeugachse F. Dabei ist die Aufnahme 5 für die eine Lagerstelle 8 des Querlenkers 7 durch zwei Auslegeraufnahmeglieder 5a,5b gebildet, die in je einem Ausleger 9,10 vorgesehen sind, welcher vom Grundkörper 1 ausgeht.

Die zweite Lageraufnahme 6 für die zweite Lagerstelle 11 am Querlenker 7 ist ebenfalls an einem Ausleger 12 vorgesehen. Der Vorderachsträger 1 hat weiterhin Aufnahmen bzw. Ausnehmungen 13 zur Befestigung eines Lenkgetriebes.

Weiterhin ist in den Träger 1 eine Aufnahme 14 zur Lagerung der Pendelstütze vorgesehen und Aufnahmen bzw. Ausnehmungen 15 zur Befestigung des Stabilisators.

Die Ausleger 12 sind durch Verstärkungsrippen 16,17 umgeben, die vom Grundkörper ausgehend in der Lageraufnahme 6 enden.

Der Träger besitzt weiterhin beidseits der Fahrzeuglängsachse F jeweils vorgesehene erste, zweite und dritte Aufnahmen bzw. Ausnehmungen für Befestigungsmittel zur Festlegung des Trägers am Fahrzeugaufbau, nämlich Aufnahmen bzw. Ausnehmungen 18,19,20. Die erste Aufnahme bzw. Ausnehmung 18 für Befestigungsmittel zur Festlegung des Trägers am Fahrzeugaufbau ist am Ausleger 16 vorgesehen, und zwar auf der dem Grundkörper abgekehrten Seite der Aufnahme 6.

Die jeweilige Sicke 16 geht unmittelbar in die zweite Aufnahme für die Befestigungsmittel zur Festlegung des Trägers am Fahrzeugaufbau über. Die dritte Aufnahme 20 ist an einem Ausleger 21 vorgesehen, der ausgeht von dem Ausleger 10, der auch das Aufnahmeglied 5b der ersten Lageraufnahme 5 enthält.

Der Ausleger 12 mit seinen beiden Verstärkungsrippen 16 und 17 hat einen Doppel-T-förmigen Querschnitt und besitzt weiterhin auf der der Aufnahme 18 abgekehrten Seite der zweiten Lageraufnahme 6 eine zumindest annähernd quer zum Träger 12 verlaufende Verstärkungssicke 22.

## Patentansprüche

1. Vorderachsträger (1) für Kraftfahrzeuge, bei dem jeweils zwei Aufnahmen bzw. Ausnehmungen (5, 6) für die Lagerstellen (8, 11) zur Schwenklagerung je eines von zwei Radführungsgliedern (7), wie Quer- bzw. Dreieckslenker, und Aufnahmen bzw. Ausnehmungen (18, 19, 20) zur Befestigung des Vorderachsträgers (1) als vorgefertigte Einheit mitsamt vormontierten Aggregaten am Fahrzeugaufbau vorgesehen sind, sowie Aufnahmen bzw. Ausnehmungen (13) für die Befestigung des Lenkgetriebes und Aufnahmen bzw. Ausnehmungen (15) für die Befestigung des Stabilisators, wobei eine einzige Aufnahme bzw. Ausnehmung (14) für die Lagerung einer Pendelstütze vorgesehen ist, welche (14) vorwiegend zylindrisch hülsenartig ausgebildet und vorwiegend zur Fahrbahn ausgerichtet ist, und der Vorderachsträger (1) als mit diesen Aufnahmen bzw. Ausnehmungen (5, 6, 13, 14, 15, 18, 19, 20) einstückiges und diese untereinander verbindendes Bauteil aus Leichtmetall hergestellt ist.

2. Vorderachsträger (1) für Kraftfahrzeuge, bei dem jeweils zwei Aufnahmen bzw. Ausnehmungen (5, 6) für die Lagerstellen (8, 11) zur Schwenklagerung je eines von zwei Radführungsgliedern (7), wie Quer- bzw. Dreieckslenker, und Aufnahmen bzw. Ausnehmungen (18, 19, 20) zur Befestigung des Vorderachsträgers (1) als vorgefertigte Einheit mitsamt vormontierten Aggregaten am Fahrzeugaufbau vorgesehen sind, sowie Aufnahmen bzw. Ausnehmungen (13) für die Befestigung des Lenkgetriebes, wobei eine einzige Aufnahme bzw. Ausnehmung (14) für die Lagerung einer Pendelstütze vorgesehen ist, welche (14) vorwiegend zylindrisch hülsenartig ausgebildet und vorwiegend zur Fahrbahn ausgerichtet ist, und der Vorderachsträger (1) als mit diesen Aufnahmen bzw. Ausnehmungen (5, 6, 13, 14, 18, 19, 20) einstückiges und diese untereinander verbindendes Bauteil aus Leichtmetall hergestellt ist.

3. Vorderachsträger (1) für Kraftfahrzeuge, bei dem jeweils zwei Aufnahmen bzw. Ausnehmungen (5, 6) für die Lagerstellen (8, 11) zur Schwenklagerung je eines von zwei Radführungsgliedern (7), wie Quer- bzw. Dreieckslenker, und Aufnahmen bzw. Ausnehmungen (18, 19, 20) zur Befestigung des Vorderachsträgers (1) als vorgefertigte Einheit mitsamt vormontierten Aggregaten am Fahrzeugaufbau vorgesehen sind, und Aufnahmen bzw. Ausnehmungen (15) für die Befestigung des Stabilisators, wobei eine einzige Aufnahme bzw. Ausnehmung (14) für die Lagerung einer Pendelstütze vorgesehen ist, welche (14) vorwiegend zylindrisch hülsenartig ausgebildet und vorwiegend zur Fahrbahn ausgerichtet ist, und der Vorderachsträger (1) als mit diesen Aufnahmen bzw. Ausnehmungen (5, 6, 14, 15, 18, 19, 20) einstückiges und diese untereinander verbindendes Bauteil aus Leichtmetall hergestellt ist.

4. Vorderachsträger (1) nach einem der Ansprüche 1 bis 3, **dadurch gekennzeichnet, dass** das Leichtmetall eine Aluminium-Legierung ist.

5. Vorderachsträger (1) nach einem der Ansprüche 1 bis 4, **dadurch gekennzeichnet, dass** das Bauteil in einem Aluminiumgussverfahren, wie im Kippkokillengussverfahren, hergestellt ist.

6. Vorderachsträger (1) nach einem der Ansprüche 1 bis 5, **dadurch gekennzeichnet, dass** derselbe (1) - bis auf die Ausnehmungen bzw. Aufnahmen (5, 6, 13, 14, 15, 18, 19, 20) und gegebenenfalls weitere Ausnehmungen, z.B. Montageausnehmungen - einen praktisch durchgehenden Grundkörper (2) aufweist, der von Verstärkungsrippen (3, 4) umgeben ist, und die Aufnahmen (5, 6) für die Lagerung der Radführungsglieder (7) auf Auslegern (9, 10, 12) vorgesehen sind.

7. Vorderachsträger (1) nach einem der Ansprüche 1 bis 6, **dadurch gekennzeichnet, dass** die eine der Aufnahmen (5) zur Lagerung jedes der Radführungsglieder (7) zwei zumindest annähernd in Fahrzeuglängsrichtung (F) beabstandete Aufnahmeglieder (5a, 5b) besitzt, zur U-förmig umgreifenden Halterung des einen Lagers (8) am Radführungsglied (7) und dass die zweite der Aufnahmen (6) zur Lagerung jedes der Radführungsglieder (7) in Fahrzeuglängsrichtung (F) beabstandet von den Aufnahmegliedern (5a, 5b) ist und die zweite Aufnahme (6) zur Lagerung der zweiten als Zapfen (11) ausgebildeten Lagerstelle des Radführungsgliedes (17) dient.

8. Vorderachsträger (1) nach einem der Ansprüche 1 bis 7, **dadurch gekennzeichnet, dass** an dem die zweite Aufnahme (6) aufweisenden Ausleger (12) eine erste Aufnahme (18) für Befestigungsmittel zur Befestigung des Vorderachsträgers (1) am Fahrzeugaufbau vorgesehen ist.

9. Vorderachsträger (1) nach einem der Ansprüche 1 bis 8, **dadurch gekennzeichnet, dass** die erste Aufnahme (18) für Befestigungsmittel auf der dem Grundkörper (2) abgekehrten Seite der zweiten Aufnahme (6) vorgesehen ist.

10. Vorderachsträger (1) nach einem der Ansprüche 1 bis 9, **dadurch gekennzeichnet, dass** der die zweite Aufnahme (6) aufweisende Ausleger (12) zwei von der zweiten Aufnahme (6) ausgehende den Ausleger (12) umgebende und in den Grundkörper (1) übergehende Verstärkungssicken (16, 17) aufweist.

11. Vorderachsträger (1) nach Anspruch 10, **dadurch gekennzeichnet, dass** eine erste Verstärkungssicke (17) auf der der ersten Aufnahme (5) zugekehrten Seite des die zweite Aufnahme (6) tragenden Auslegers (12) verläuft und in den Grundkörper (2) übergeht.

12. Vorderachsträger (1) nach einem der Ansprüche 8 oder 11, **dadurch gekennzeichnet, dass** eine weitere Verstärkungssicke (16) auf der der ersten Aufnahme (5) abgekehrten Seite des die zweite Aufnahme (6) tragenden Auslegers (12) im Bereich einer zweiten Aufnahme bzw. Ausnehmung (19) für Befestigungsmittel zur Festlegung des Vorderachsträgers (1) am Fahrzeugaufbau in den Grundkörper (2) übergeht.

13. Vorderachsträger (1) nach einem der Ansprüche 1 bis 12, **dadurch gekennzeichnet, dass** der die zweite Aufnahme (6) tragende und vom Grundkörper (2) ausgehende Ausleger (12) einen Doppel-T-Querschnitt besitzt.

14. Vorderachsträger (1) nach Anspruch 13, **dadurch gekennzeichnet, dass** der Ausleger (12) zwischen der zweiten Aufnahme bzw. Ausnehmung (6) für die Aufnahme der zweiten Lagerstelle (11) und der zweiten Aufnahme bzw. Ausnehmung (19) für die Befestigungsmittel zur Festlegung des Vorderachsträgers (1) am Fahrgestell eine weitere zumindest annähernd quer zum Ausleger (12) verlaufende Verstärkungssicke (22) aufweist.

## Claims

1. Front-axle bracket (1) for motor vehicles, in which in each case two retainers or recesses (5, 6) are provided for the bearing points (8, 11) for pivoting bearing of in each case two wheel guide elements (7), such as transverse links or wishbones, and retainers or recesses (18, 19, 20) for fastening of the front-axle bracket (1) as a premanufactured unit including premounted assemblies on the vehicle structure, as well as retainers or recesses (13) for the fastening of the steering gear and retainers or recesses (15) for the fastening of the stabiliser, wherein a single retainer or recess (14) is provided for the bearing of a rocker pendulum, which (14) is primarily formed cylindrically sleeve-like and is primarily aligned with the carriageway, and the front-axle bracket (1) is produced as a component composed of light metal which is in one-piece with these retainers or recesses (5, 6, 13, 14, 15, 18, 19, 20) and connects these to one another.

2. Front-axle bracket (1) for motor vehicles, in which in each case two retainers or recesses (5, 6) are provided for the bearing points (8, 11) for pivoting bearing of in each case two wheel guide elements (7), such as transverse links or wishbones, and retainers or recesses (18, 19, 20) for fastening of the front-axle bracket (1) as a premanufactured unit including premounted assemblies on the vehicle structure, as well as retainers or recesses (13) for the fastening of the steering gear, wherein a single retainer or recess (14) is provided for the bearing of a rocker pendulum, which (14) is primarily formed cylindrically sleeve-like and is primarily aligned with the carriageway, and the front-axle bracket (1) is produced as a component composed of light metal which is in one-piece with these retainers or recesses (5, 6, 13, 14, 18, 19, 20) and connects these to one another.

3. Front-axle bracket (1) for motor vehicles, in which in each case two retainers or recesses (5, 6) are provided for the bearing points (8, 11) for pivoting bearing of in each case two wheel guide elements (7), such as transverse links or wishbones, and retainers or recesses (18, 19, 20) for fastening of the front-axle bracket (1) as a premanufactured unit including premounted assemblies on the vehicle structure, and retainers or recesses (15) for the fastening of the stabiliser, wherein a single retainer or recess (14) is provided for the bearing of a rocker pendulum, which (14) is primarily formed cylindrically sleeve-like and is primarily aligned with the carriageway, and the front-axle bracket (1) is produced as a component composed of light metal which is in one-piece with these retainers or recesses (5, 6, 14, 15, 18, 19, 20) and connects these to one another.

4. Front-axle bracket (1) according to one of Claims 1 to 3, **characterised in that** the light metal is an aluminium alloy.

5. Front-axle bracket (1) according to one of Claims 1 to 4, **characterised in that** the component is produced using an aluminium casting process, as in the tipping gravity die casting process.

6. Front-axle bracket (1) according to one of Claims 1 to 5, **characterised in that** the same (1) - apart from the recesses or retainers (5, 6, 13, 14, 15, 18, 19, 20) and where applicable any further recesses, e.g. mounting recesses - has a practically continuous base body (2), which is surrounded by reinforcing ribs (3, 4), and the retainers (5, 6) are provided for the bearing of the wheel guide elements (7) on extension arms (9, 10,12).

7. Front-axle bracket (1) according to one of Claims 1 to 6, **characterised in that** one of the retainers (5) for bearing each of the wheel guide elements (7) possesses at least two retainer elements (5a, 5b) spaced apart at least approximately in the longitudinal direction of the vehicle (F), for U-shaped encompassing retention of one bearing (8) on the wheel guide element (7) and that the second of the retainers (6) for bearing each of the wheel guide elements (7) is spaced apart from the retainer elements (5a, 5b) in the longitudinal direction of the vehicle (F) and the second retainer (6) acts to bear the second bearing point, which is formed as a journal (11), of the wheel guide element (17).

8. Front-axle bracket (1) according to one of Claims 1 to 7, **characterised in that** a first retainer (18) for fastening means for fastening of the front-axle bracket (1) on the vehicle structure is provided on the extension arm (12) which has the second retainer (6).

9. Front-axle bracket (1) according to one of Claims 1 to 8, **characterised in that** the first retainer (18) for fastening means is provided on that side of the second retainer (6) which faces away from the base body (2).

10. Front-axle bracket (1) according to one of Claims 1 to 9, **characterised in that** the extension arm (12) having the second retainer (6) has two reinforcing beads (16, 17) which proceed from the second retainer (6), surround the extension arm (12) and form a transition to the base body (1).

11. Front-axle bracket (1) according to Claim 10, **characterised in that** a first reinforcing bead (17) runs on that side of the extension arm (12) which bears the second retainer (6) which faces away from the first retainer (5) and forms a transition to the base body (2).

12. Front-axle bracket (1) according to one of Claims 8 or 11, **characterised in that** a further reinforcing bead (16) forms a transition to the base body (2) on that side of the extension arm (12), which bears the second retainer (6), which faces away from the first retainer (5) in the region of a second retainer or recess (19) for fastening means for fixing of the front-axle bracket (1) on the vehicle structure.

13. Front-axle bracket (1) according to one of Claims 1 to 12, **characterised in that** the extension arm (12) bearing the second retainer (6) and proceeding from the base body (2) possesses a double-T cross-section.

14. Front-axle bracket (1) according to Claim 13, **characterised in that** the extension arm (12) has a further reinforcing bead (22) which runs at least approximately transverse to the extension arm (12) between the second retainer or recess (6) for receiving the second bearing point (11) and the second retainer or recess (19) for the fastening means for fixing the front-axle bracket (1) on the chassis.

## Revendications

1. Support d'essieu avant (1) pour véhicules automobiles, sur lequel sont prévus respectivement deux logements ou évidements (5, 6) pour les points de palier (8, 11) pour le logement pivotant de l'un des deux éléments de guidage de roue (7), comme des bras oscillants transversaux ou des bras oscillants triangulaires et des logements ou évidements (18, 19, 20) pour la fixation du support d'essieu avant (1) comme unité préfabriquée avec des ensembles prémontés sur la carrosserie du véhicule, ainsi que des logements ou évidements (13) pour la fixation du mécanisme de direction et des logements ou évidements (15) pour la fixation du stabilisateur, un seul logement ou évidement (14) étant prévu pour le support d'un soutien pendulaire qui (14) est réalisé principalement de manière cylindrique comme une douille et est orienté principalement vers la chaussée, et le support d'essieu avant (1) comme composant formant une seule pièce avec ces logements ou évidements (5, 6, 13, 14, 15, 18, 19, 20) et les reliant entre eux étant fabriqué à base de métal léger.

2. Support d'essieu avant (1) pour véhicules automobiles, sur lequel sont prévus respectivement deux logements ou évidements (5, 6) pour les points de palier (8, 11) pour le logement pivotant de l'un des deux éléments de guidage de roue (7), comme des bras oscillants transversaux ou des bras oscillants triangulaires, et des logements ou évidements (18, 19, 20) pour la fixation du support d'essieu avant (1) comme unité préfabriquée avec des ensembles prémontés sur la carrosserie du véhicule, ainsi que des logements ou évidements (13) pour la fixation du mécanisme de direction, un seul logement ou évidement (14) étant prévu pour le support d'un soutien pendulaire qui est réalisé principalement de manière cylindrique comme une douille et est orienté principalement vers la chaussée, et le support d'essieu avant (1) comme composant formant une seule pièce avec ces logements ou évidements (5, 6, 13, 14, 18, 19, 20) et les reliant entre eux étant fabriqué à base de métal léger.

3. Support d'essieu avant (1) pour véhicules automobiles, sur lequel sont prévus respectivement deux logements ou évidements (5, 6) pour les points de palier (8, 11) pour le logement pivotant de l'un des deux éléments de guidage de roue (7), comme des bras oscillants transversaux ou des bras oscillants triangulaires, et des logements ou évidements (18, 19, 20) pour la fixation du support d'essieu avant (1) comme unité préfabriquée avec des ensembles prémontés sur la carrosserie du véhicule, et des logements ou évidements (15) pour la fixation du stabilisateur, un seul logement ou évidement (14) étant prévu pour le support d'un soutien pendulaire qui est réalisé principalement de manière cylindrique comme une douille et est orienté principalement vers la chaussée, et le support d'essieu avant (1) comme composant formant une seule pièce avec ces logements ou évidements (5, 6, 14, 15, 18, 19, 20) et les reliant entre eux étant fabriqué à base de métal léger.

4. Support d'essieu avant (1) selon l'une quelconque des revendications 1 à 3, **caractérisé en ce que** le métal léger est un alliage d'aluminium.

5. Support d'essieu avant (1) selon l'une quelconque des revendications 1 à 4, **caractérisé en ce que** le composant est fabriqué dans un procédé de fonte d'aluminium tel que le procédé de coulée en coquille basculante.

6. Support d'essieu avant (1) selon l'une quelconque des revendications 1 à 5, **caractérisé en ce que** lui-même (1), à l'exception des évidements et des logements (5, 6, 13, 14, 15, 18, 19, 20) et éventuellement d'autres évidements, par exemple des évidements de montage, présente un corps de base (2) pratiquement continu, qui est entouré de moulures de renfort (3, 4) et les logements (5, 6) sont prévus pour la fixation des éléments de guidage de roue (7) sur des flèches (9, 10, 12).

7. Support d'essieu avant (1) selon l'une quelconque des revendications 1 à 6, **caractérisé en ce que** l'un des logements (5) pour la fixation de chacun des éléments de guidage de roue (7) présente deux éléments de logement (5a, 5b) espacés au moins approximativement dans le sens longitudinal du véhicule (F), pour le support enveloppant en forme de U d'un palier (8) sur l'élément de guidage de roue (7) et **en ce que** le second des logements (6) pour la fixation de chacun des éléments de guidage de roue (7) dans le sens longitudinal du véhicule (F) est espacé des éléments de logement (5a, 5b) et le second logement (6) sert à la fixation du second point de palier, conçu comme pivot (11), de l'élément de guidage de roue (17).

8. Support d'essieu avant (1) selon l'une quelconque des revendications 1 à 7, **caractérisé en ce qu'**un premier logement (18) pour des moyens de fixation pour l'ancrage du support (1) sur la carrosserie du véhicule est prévu sur la flèche (12) présentant le second logement (6).

9. Support d'essieu avant (1) selon l'une quelconque des revendications 1 à 8, **caractérisé en ce que** le premier logement (18) est prévu pour des moyens de fixation sur le côté, opposé au corps de base (2), du second logement (6).

10. Support d'essieu avant (1) selon l'une quelconque des revendications 1 à 9, **caractérisé en ce que** la flèche (12) présentant le second logement (6), présente deux moulures de renfort (16, 17) partant du second logement (6), entourant la flèche (12) et faisant place au corps de base (2).

11. Support d'essieu avant (1) selon la revendication 10, **caractérisé en ce qu'**une première moulure de renfort (17) est agencée sur le côté, tourné vers le premier logement (5), de la flèche (12) portant le second logement (6) et fait place au corps de base (2).

12. Support d'essieu avant (1) selon l'une quelconque des revendications 8 ou 11, **caractérisé en ce qu'**une autre moulure de renfort (16) fait place au corps de base (2) sur le côté, tourné vers le premier logement (5), de la flèche (12) portant le second logement (6) dans la zone d'un second logement ou évidement (19) pour des moyens de fixation pour l'ancrage du support d'essieu avant (1) sur la carrosserie du véhicule.

13. Support d'essieu avant (1) selon l'une quelconque des revendications 1 à 12, **caractérisé en ce que** la flèche (12) portant le second logement (6) et partant du corps de base (2) présente une section en double T.

14. Support d'essieu avant (1) selon revendication 13, **caractérisé en ce que** la flèche (12) présente entre le second logement ou évidement (6) pour le logement du second point de palier (11) et du second logement ou évidement (19) pour les moyens de fixation pour l'ancrage du support d'essieu avant (1) sur le train de roulement une autre moulure de renfort (22) agencée au moins approximativement transversalement à la flèche (12).
